# EUROPEAN PATENT SPECIFICATION

(11) **EP 4 516 091 B1**
(45) Date of publication and mention of the grant of the patent: **29.04.2026**
(21) Application number: 23193925.7
(22) Date of filing: 29.08.2023
(51) Int. Cl.: A01G 23/00, B60P 3/41, B62D 33/02

(54) **BUNK LOAD SYSTEM FOR A FORESTRY WORKING VEHICLE**
LADESYSTEM FÜR EIN LANDWIRTSCHAFTSARBEITSFAHRZEUG
SYSTÈME DE CHARGE SUPERPOSÉ POUR VÉHICULE DE TRAVAIL FORESTIER

(43) Date of publication of application: 05.03.2025
(73) Proprietor: Deere & Company, Moline, IL 61265 (US)
(72) Inventor: Latti, Simo, 68163 Mannheim (DE); Hautamäki, Teemu, 68163 Mannheim (DE)
(74) Representative: Reichert, Christian

(56) References cited:
- EP-A1- 4 305 954
- US-A1- 2005 066 641
- US-A1- 2018 194 266
- US-A1- 2020 247 482

## Description

The invention is a bunk load system for a forestry working vehicle. The bunk load system reduces the complexity of the coordination of an operator between loading operations and adapting the size of the load bunk of the vehicle accordingly.

Forestry operations include the transport of logs or processed wood out of the working area in the forest for further processing. Usually, forestry forwarder vehicles are used in this line of work. The operator inside the vehicle cabin uses a crane with different booms attached and a grapple tool to load the logs or wood from the ground on the bunk or to unload. Usually, the bunk is defined by surrounding stakes or support arms that hold the logs in place. During the load operation the bunk is filled with the logs, so that at a certain point, the height limit of the support arms is reached by the filling height of the logs on the bunk. In cases where the load weight limit is not reached, the operator can extend the support arms to increase the volume of the bunk. Yet, the changing of the size of the bunk requires usually manual labor and becomes cumbersome when the bunk already contains logs that hinder the work.

In some cases, the support arms are equipped with hydraulic cylinders and can be extended from the cabin by actuating the hydraulic cylinders. Yet, this work requires the operator to consciously activate the hydraulic actuation and to estimate the adjustment of the hydraulic support arms. Especially during loading operations, the operator is forced to set down the load in the grapple, stop the loading operation and adjust the height of the support arms.

US5611286 discloses an extendible bunk stake mounted on a logging vehicle has an extension member that can be raised and lowered within a support member by an operator. A remotely actuatable motor, such as a source of working fluid and an expansible working chamber can be enabled by an operator to raise and lower the extension member from a safe distance away from a log loading area of the vehicle. Following bunk load systems are disclosed in the relevant prior art: US 2020/247482 A1, US 2018/194266 A1 and US 2005/066641 A1.

There is need for a loading system that reliefs the operator to be able to work unhindered by interruptions and to increase the safety of the vehicle.

The problems are solved by the present invention in that a loading system is presented in line with the claims and the description.

The invention is a bunk load system comprising a load bunk with support arms, the support arm having a horizontal and vertical section, the sections being adjustable by hydraulic actuation means, sensors, detecting the position of each section of the load arm, a load height detection system, comprising a crane adapted for loading and unloading the load bunk, adapted to detect a vertical position of its crane tip in relation to a bottom surface of the load bunk, adapted to detect a loading and unloading operation, a controller, adapted to receive input from the sensors, to receive the input from the vertical position of the crane tip, and to compare the input values, and in case the crane is detecting a loading operation and the loading height is at a limit of the load bunk, the controller is further adapted to send as an output a signal to the hydraulic actuation means adjusting the height of the vertical section or the length of the horizontal section of the load bunk.

The load bunk usually is used to load tree trunks or logs onto the bunk. The support arms surround the load bunk and define a volume of the load bunk depending on the height and width of the support arms. The support arms can be adapted in a vertical and horizontal direction, defining a resulting height and width of the bunk volume. Each load arm comprises at least an hydraulic actuator, adapted to be controlled and adjusted by a hydraulic system with an hydraulic pump. Each actuator may have a positioning sensor so that the position and extension of each section of the support arms is detectable by the provided sensors. The load height detection system comprises a crane with multiple booms that are connected to each other and a crane tip at an outer end of the crane. The crane is controlled by another hydraulic circuit with either the same hydraulic pump or an additional one. The crane and the booms are individually controllable by hydraulic actuators and sensors on each actuators are adapted to measure the position of the actuator and the extension providing the ability to calculate or measure the height of the crane tip above the load bunk or above a base surface of the bunk. A controller compares the input from the size of the load bunk and the height of the crane tip, depending on the detection of a loading operation. A loading operation can be detected in that a grapple tool attached to the crane tip is given an open close command or by manual selection of the crane operator. In case the controller detects a deviation between the two input, the bunk load system can output a control command to automatically extend the sections of the support arms in horizontal and vertical direction or alert the crane operator to a fully loaded status of the load bunk. The invention provides an overload protection of the load bunk and additionally the ability to automatically extend the load bunk without manual labor from the crane operator.

In a further embodiment the controller can send an output signal to the hydraulic actuation to reduce the height of the vertical section or the length of the horizontal section of the load bunk when the crane is detecting an unloading operation and the sensor signal indicates a reduced load height.

The controller has an input from the sensors of the support arms and from the crane's hydraulic actuators that enable the calculation of the height of the crane tip above the load bunk. The crane can detect an unloading operation, either by a manual command from the crane operator or by an open close command outside of the load bunk area. The position of the crane can be detected by an angle sensor in the crane, measuring the turning angle in relation to a middle line of the load bunk. Also, the hydraulic actuators can have a pressure sensor inside the hydraulic cylinders, enabling the detection of load on the crane. In case of the detection or the setting of an unloading operation, the controller gives out command to the support arms and the sections to reduce the height or the width of the load bunk without the manual labor from the crane operator or any input to the controller. The operator can fully concentrate on the unloading operation and the height of the support arms is reduced so that the workload and stress of the operator is reduced. The lower the height of the support arms becomes the less the operator must concentrate on avoidance of the support arms during unloading, reducing the risk of damage and lost product.

In a further embodiment each section can comprise an inner and outer segment, which are telescopically connected to each other, so that the length of the vertical and horizontal sections is variable.

The section comprises telescopic elements which can be moved relatively to each other by a hydraulic actuator. The section can be shortened or extended depending on the position of the hydraulic actuator. The hydraulic actuator is powered by a hydraulic pump which is further controlled by a controller, depending on the sensor measurements. The telescopic arrangement of the sections enables also a compact small volume of the load bunk in an empty state.

In a further embodiment each section can comprise an inner hydraulic actuator with at least one hydraulic pressure chamber, connected to the horizontal and vertical sections, so that movement of the hydraulic actuators changes the lengths of the vertical and horizontal sections respectively.

The hydraulic actuator can be arranged and place in an inside volume of the sections. This enables the hydraulic lines to be placed inside the sections and are protected from environmental effects and damage. As the sections and the load bunk is made of metal parts, the hydraulic lines are safe from damage.

In a further embodiment the load volume of the load bunk can be adaptable by actuating the hydraulic actuator.

The hydraulic actuator in each vertical and horizontal section enables the support arms to extend in the width and height direction of the load bunk. The hydraulic actuator can be hydraulically connected to each other in a serial setup or can be connected in a parallel setup. The load bunk can be adjusted in both dimensions at the same time, reducing the time necessary for changing the volume.

In a further embodiment the crane can be adapted to detect a vertical slew angle, a rotational angle, at least a horizontal distance of the crane tip to the base of the crane and a height position of the crane tip relative to the load bunk.

The vertical slew angle enables the controller to detect a leaning of the crane which together with the rotational angle in relation to a vertical crane axis allows the controller to detect the horizontal and vertical position of the crane tip. This further enable the crane control to facilitate automatic movements between a log pile and the load bunk. Also, the controller can detect a loading or unloading situation of the crane, depending on an opening, or closing of a grapple tool attached to the crane. The opening and closing can be detected by hydraulic flow or pressure increase at the time of closing. Also, the hydraulic pressure can be used to detect a load state of the crane. The detection of the crane tip position enables the controller to automatically detect the load height of the load bunk and automatically move the hydraulic actuators in the support arms and adjust the load volume of the load bunk or only the width or the height of the support arms.

In a further embodiment the controller can be adapted to receive the positioning data of the crane and the crane tip, the controller being adapted to interpret the data of the vertical slew angle, the rotational angle, the distance and the height data to identify if the crane tip is inside or outside the load bunk, and to identify a loading or an unloading operation by an increasing or decreasing crane tip height in the area of the load bunk at a final position, the final position being defined by an open/close status of a grapple tool, and determining a fully loaded or fully unloaded load bunk.

In a further embodiment a multiple of final positions can be recorded and the controller is adapted to compare the multiple of final positions to identify a loading or an unloading operation, and indicating, when an uppermost or lowermost position is reached.

The loading of the load bunk represents a stop position when the grapple is opened inside the load bunk area. This stop position steadily increases during the load operation. The stop positions, being detectable by the controller due to sensor input from the crane and the hydraulic actuators are interpolated by the controller and enable to determine a loading operation. The latest stop position can come close to the height limit of the load bunk support arms. In that case the controller outputs a control command to increase the height and/or the width of the load bunk so that the volume is increase. Alternatively, the controller can output a command to the operator that the load bunk is in fully loaded state and that the loading is complete. The process reduces the workload on the operator to avoid an overload state and reduces the effort to manually extend the volume of the load bunk. The system increases the work safety. Additionally, the calculated volume enables a work planning operation to estimate the work or product that has been harvested or transported.

In a further embodiment the final position can be a position where the crane tip stops and reverses the vertical direction, or where the grapple is actuated between an open or close state.

The system can identify, by input from the sensors the status of a loading or unloading situation. The unloading is like the loading status, with the difference that the stop position subsequently decreases inside the load bunk. In parallel, the hydraulic pressure is reduced when the grapple tool opens outside the load bunk area. This system reduces the manual input from the crane operator and limits the workload during the operations.

In a further embodiment the measurement of the load bunk can be adaptable by the operator.

The operator can be enabled to override the measurement of the sensors or to correct the dimensions of the load bunk in the controller setup. This allows to avoid measurement errors or sensor defect that might happen during the operation without any possible service available within reasonable time. The operator can manually override the automatic adaption of the load bunk. This allows to ongoing operation even if the system is having a malfunction and support the productivity of the operator.

Another invention is a method of controlling a bunk load system comprising a load bunk with support arms, the support arm having a horizontal and vertical section, the sections being adjustable by hydraulic actuation, sensors, detecting the position of each section of the load arm, a load height detection system, comprising a crane adapted for loading and unloading the load bunk, adapted to detect a vertical position of its crane tip in relation to a bottom surface of the load bunk, adapted to detect a loading and unloading operation, a controller, adapted to receive input from the sensors of the load bunk and receiving the input from the vertical position of the crane tip, comparing the input values, and in case the crane is detecting a loading operation and the loading height is at a limit of the load bunk, sending as an output a signal to the hydraulic actuation adjusting the height of the vertical section or the length of the horizontal section of the load bunk.

The load bunk usually is used to load tree trunks or logs onto the bunk. The support arms surround the load bunk and define a volume of the load bunk depending on the height and width of the support arms. The support arms can be adapted in a vertical and horizontal direction, defining a resulting height and width of the bunk volume. Each load arm comprises at least an hydraulic actuator, adapted to be controlled and adjusted by a hydraulic system with an hydraulic pump. Each actuator may have a positioning sensor so that the position and extension of each section of the support arms is detectable by the provided sensors. The load height detection system comprises a crane with multiple booms that are connected to each other and a crane tip at an outer end of the crane. The crane is controlled by another hydraulic circuit with either the same hydraulic pump or an additional one. The crane and the booms are individually controllable by hydraulic actuators and sensors on each actuators are adapted to measure the position of the actuator and the extension providing the ability to calculate or measure the height of the crane tip above the load bunk or above a base surface of the bunk. A controller compares the input from the size of the load bunk and the height of the crane tip, depending on the detection of a loading operation. A loading operation can be detected in that a grapple tool attached to the crane tip is given an open close command or by manual selection of the crane operator. In case the controller detects a deviation between the two input, the bunk load system can output a control command to automatically extend the sections of the support arms in horizontal and vertical direction or alert the crane operator to a fully loaded status of the load bunk. The invention provides an overload protection of the load bunk and additionally the ability to automatically extend the load bunk without manual labor from the crane operator.

In a further embodiment the operator can manually adjust the size of the load bunk or activate the automatic change of the size of the bunk load system.

The method allows the operator to adjust the values of the load bunk manually. This can be used in case of a malfunction of the sensors or the controller evaluating the volume of the bunk.

The inventions are further described by the figures 1 to 3.
Figure 1 shows a forwarder forestry vehicle used for transporting logs;
Figure 2 depicts a detail of the load bunk with the support arms surrounding the load bunk;
Figure 3 details the load bunk area of a forestry vehicle.

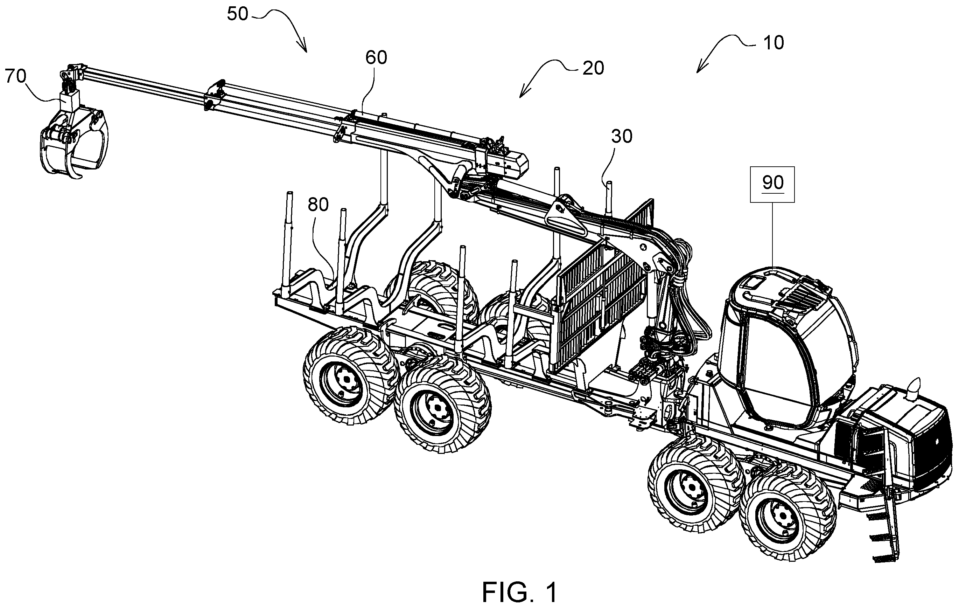

The forwarder vehicle in Figure 1 has a front end with an operator cabin and an engine compartment. The front part of the vehicle comprises a separate chassis part and is connected to a rear chassis carrying a load bunk 20. Crane 60 is placed on the rear chassis and usually comprises of multiple connected boom and a slew carrier used to turn the crane 60 around a vertical axis. The current shown vehicle has a crane 60 with at least 3 boom, one being vertically arranged on the slewing carrier. The last boom has a boom tip 70 and is used to connect and carry usable attachments. The last boom usually also comprises an extension which enables an inner part of the boom to slidably extend the reach of the crane 60. Due to the crane design and the turnability the operator is able to reach to multiple ground locations during load operations, reducing work time for rearranging the placement of the vehicle.

The operator cabin also comprises a controller 90 used to control the movement of the crane 60 by controlling the hydraulic pump and the hydraulic actuators for moving the crane 60. The controller 90 is manipulable by the operator with the help of a controller interface which is also used to output operator information.

The rear chassis load bunk 20 is surrounded by multiple support arms 30 which extend in a horizontal and vertical direction thereby defining a load bunk space or volume where the logs of the forest operation are placed in a lengthwise orientation for transport. The support arm's sections are extendable in the horizontal and vertical direction, preferably by hydraulic actuators so that the volume of the load bunk 20 can be enlarged or reduced depending on the load volume and load height of the logs on the load bunk 20. The crane 60 is outfitted with sensors, which enable the measurement of the extension of the hydraulic actuators so that the position of the booms and the crane tip 70 is calculated by the controller 90 receiving the input from the sensors. The controller 90 includes a geometric model of the crane 60 so that at each time the controller 90 can calculate the current position of the crane tip 70. The position of the crane tip 70 is relevant to a bottom surface 80 of the load bunk 20 used a reference for the crane tip height.

A usual loading operation begins with the stop of the vehicle near a log pile and the outward movement of the crane 60 and the unfolding of the booms from a transport position inside the load bunk 20. The crane 60 is then turned over to a side of the vehicle and lowered to grab multiple logs. The crane 60 is then raised to move the logs inside the load bunk space and the logs are moved over the support arms 30 to the load bunk 20. Inside the load bunk 20 the grapple tool is turning so that the logs have the correct lengthwise orientation and then lowered until the logs are lying on the load bunk surface. Afterwards the grapple tool is opened by the operator and the crane tip 70 is lifted to pass out of the load bunk 20 again and the process is repeated. During the loading operation the grapple is opened multiple times inside the load space to place the logs. Each position of opening the grapple tool or stopping the crane tip 70 inside a lowest position inside the load bunk space is recorded by the controller 90. If a second stop position inside the load space or if a second opening position inside the load space is showing an increased distance to the reference bottom surface 80 of the load bunk 20, the controller 90 detects a loading operation. This process can involve the analysis of multiple stopping position or opening positions.

The loading operation increases the height of logs inside the load bunk 20 which will result in reaching an upper height limit of the support arms 30. The support arms 30 also comprise sensors 40 in the horizontal and vertical sections 31 and 32, allowing the controller 90 to calculate the height and width of the support arms 30. Together this enables the controller 90 to calculate the volume of the load bunk 20 and the position of the tip of the support arms 30.

In case during the loading operation the height of the loading logs is getting within the height of the support arms 30 the controller 90 detects the limit of the height and issues a command and output to the hydraulic actuators of the support arms 30 to either extend the horizontal width or the vertical height or both of the support arm sections 31 and 32. The operator is continuing the loading operation and can omit to manually or by controller 90 input change the volume of the load bunk 20. The controller 90 can be programmed to increase the loading volume in predetermined increments at each time or to extend the volume to a predetermined limit. During the progress of the loading operation the load bunk 20 will reach a fully loaded state wherein the controller 90 can inform the operator of the fully loaded state so that overloading the vehicle is prevented.

The unloading process follows the same procedure with the difference being that the stop position or the close position of the crane tip 70 is decreasing. The controller 90 determines that an unloading operation is in progress and detects the height of the crane tip 70 in relation to the height of the support arms 30. In case the difference becomes larger the controller 90 can regulate and reduce the height and width of the support arms 30 and their sections 31 and 32.

The difference or the increments in height at which the controller 90 changes the length of the sections 31, 32 of the support arms 30 can be adjusted by the operator.

During the unloading process, the continuously lowering of the support arms 30 can also help the operator reduce workload as the movement of the crane 60 and the tip 70 to move over the support arms 30 is equally reduced saving effort and stress.

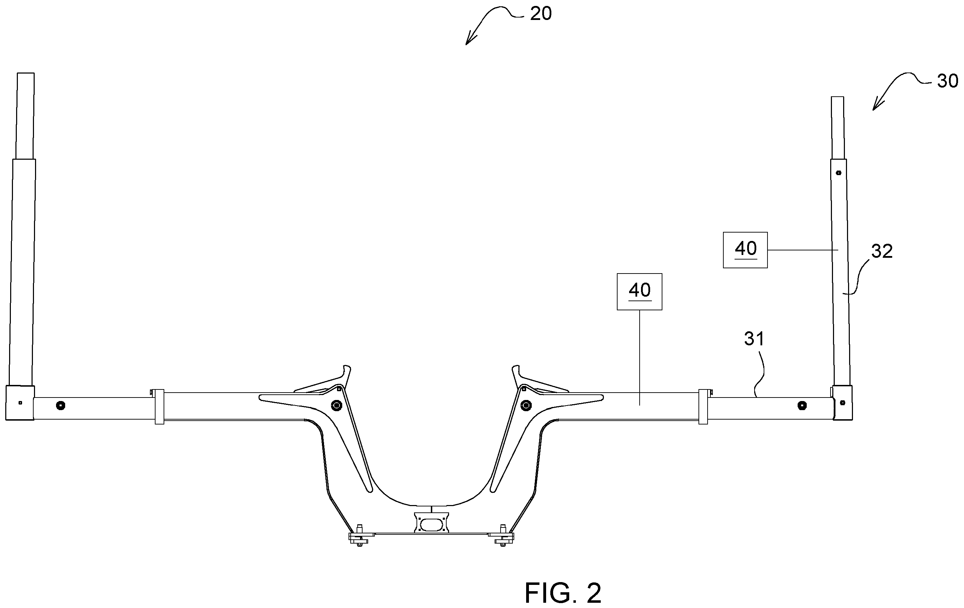

Figure 2 shows a pair of support arms 30 that are usually connected to each other by a central section. The support arms 30 can also be individually connected to a vehicle chassis. The support arms 30 have a horizontal section 31 that is extendable in a horizontal direction. The extension is usually realized by hydraulic actuators, but this can also be realized by cables or chains. The horizontal section 31 comprises at least a sensor 40 to measure the horizontal extension and to provide the measurement as input to a vehicle controller 90. The sensor 40 provides feedback to the current position and to an end stop position to indicate how much extension is still available.

The support arm 30 comprises a vertical section 32 to be extended in a vertical direction to increase the loading height of the load bunk 20. The vertical section 32 The extension is usually realized by hydraulic actuators, but this can also be realized by cables or chains. The vertical section 32 comprises at least a sensor 40 to measure the vertical extension and to provide the measurement as input to a vehicle controller 90. The sensor 40 provides feedback to the current position and to an end stop position so as to indicate how much extension is still available.

By changing the horizontal and vertical extension lengths the load bunk 20 can be increased in load height and overall volume available for loading.

As stated in context with Figure 1, the loading process is steadily increasing the lowest position of each loading step so that the increase in the stop position of the crane tip 70 is detected by the controller 90 and a difference to the current setting of the load bunk 20 and the height of the support arm 30 is calculated. In case the load height of the logs is reaching a limit height difference to the setting, the controller 90 adjusts the hydraulic actuators in the horizontal and/or vertical section 31, 32 and increases the setting of the support arms 30 and the volume of the load bunk 20.

The operator can adjust the setting in that one direction shall be increased as a priority before the second direction is changed. As an example, the operator can program the controller 90 so that at a first measure, the vertical height is increased to a maximum before the horizontal extension is increased. Of course, the order can also be the opposite, or the setting can be that both directions are extended at the same time.

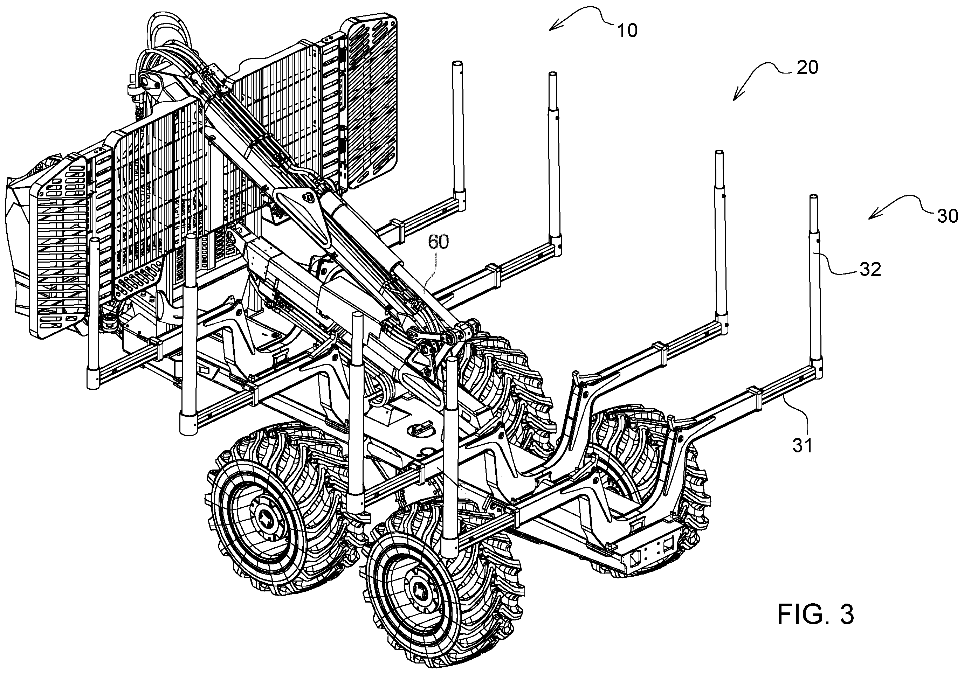

Figure 3 depict a rear chassis of a forestry vehicle. The rear chassis carries the load bunk 20. The load bunk 20 is comprising pairs of support arms 30 which are connected by a central section that is fixed to a rear chassis area of the forestry vehicle. The support arms 30 have a horizontal and vertical section 31 and 32 which are extendable by preferably a hydraulic actuation. The example of Figure 3 shows eight support arms 30 but the invention can comprise more or less than that. The first pair of support arms 30 is shown in the state of the lowest vertical extension of the vertical section 32.

The logs are loaded on the load bunk 20 in a lengthwise orientation. The extension of the size of the load bunk 20 is always possible even in a loaded state as the logs are able to move in a left right direction of the vehicle so that the extended space can be optimally used.

The crane 60 is shown in a usual parking position or transport position which is used during driving of the vehicle without load. During operation the crane 60 is unfolded to a working position and the crane tip 70 is used together with a crane tool, usually a grapple tool for collecting logs from the ground or for unloading the logs. During the use of the crane 60, the operator can set the size, or the length of the support arm sections 31, 32 manually or the controller 90, with the input from sensors 40 and the crane sensors will automatically set the extension of the sections.

The bottom surface 80 of the load bunk 20 can be set in the controller 90 to different levels of the load bunk 20. In the example show, the reference is set at a central section of the load bunk 20, but it is also feasible to set the reference to an upper surface of the horizontal section 31.

The load height detection system 50 is using the crane tip 70 to detect the load height of the logs placed inside the load bunk 20. As can be seen from Figure 3 the loading operation is increasing the log height inside the load bunk 20 so that the stop position of the crane 60 or its opening /closing position to place the logs is also increasing during the loading operation. The detection of the increasing height is detected by the controller 90 so that the support arm 30 are set to be extended during the incremental increase of the load height of the logs.

The presented system enables the operator to increase work focus on the handling operations during loading and unloading and reduced workload. Any adjustments of the load bun 20 are provided by the bunk load system 10 and the load bunk 20 is adapted to each loading operation.

## Claims

1. Bunk load system (10) comprising
a load bunk (20) with support arms (30),
the support arm (30) having a horizontal (31) and vertical section (32), the sections being adjustable by hydraulic actuation means,
sensors (40), detecting the position of each section of the load arm,
a load height detection system (50), comprising
a crane (60) adapted for loading and unloading the load bunk (20),
adapted to detect a vertical position of its crane tip (70) in relation to a bottom surface (80) of the load bunk (20),
adapted to detect a loading and unloading operation, and
a controller (90), adapted to receive input from the sensors (40) of the load bunk (20), to receive the input from the vertical position of the crane tip (70), and to compare the input values, and
in case the crane (60) is detecting a loading operation and the loading height is at a limit of the load bunk (20), the controller is further adapted to send as an output a signal to the hydraulic actuation means adjusting the height of the vertical section (32) or the length of the horizontal section (31) of the load bunk (20).

2. Bunk load system (10) according to claim 1, wherein the controller (90) is adapted to send an output to the hydraulic actuation means to reduce the height of the vertical section (32) or the length of the horizontal section (31) of the load bunk (20) when the crane (60) is detecting an unloading operation and the sensor signal indicates a reduced load height.

3. Bunk load system (10) according to any of the previous claims, wherein each section comprising an inner and outer segment, which are telescopically connected to each other, so that the length of the vertical and horizontal sections is variable.

4. Bunk load system (10) according to any of the previous claims, wherein each section further comprising an inner hydraulic actuator with at least one hydraulic pressure chamber, connected to the horizontal and vertical sections, so that movement of the hydraulic actuators changes the lengths of the vertical and horizontal sections respectively.

5. Bunk load system (10) according to any of the previous claims, wherein the load volume of the load bunk (20) is adaptable by actuating the hydraulic actuator.

6. Bunk load system (10) according to any of the previous claims, wherein
the crane (60) is adapted to detect a vertical slew angle, a rotational angle, at least a horizontal distance of the crane tip (70) to the base of the crane (60) and a height position of the crane tip (70) relative to the load bunk (20).

7. Bunk load system (10) according to any of the previous claims, wherein the controller (90) is adapted to receive the positioning data of the crane (60) and the crane tip (70),
the controller (90) being adapted to interpret the data of the vertical slew angle, the rotational angle, the distance and the height data to identify if the crane tip (70) is inside or outside the load bunk (20), and to identify a loading or an unloading operation by an increasing or decreasing crane tip height in the area of the load bunk (20) at a final position,
the final position being defined by an open/close status of a grapple tool,
and determining a fully loaded or fully unloaded load bunk (20).

8. Bunk load system (10) according to the previous claim, wherein a multiple of final positions are recorded and the controller (90) is adapted to compare the multiple of final positions to identify a loading or an unloading operation, and indicating, when an uppermost or lowermost position is reached.

9. Bunk load system (10) according to any of the claims 7 or 8, wherein the final position being a position where the crane tip (70) stops and reverses the vertical direction, or where the grapple is actuated between an open or close state.

10. Bunk load system (10) according to any of the previous claims, wherein the measurement of the load bunk (20) is adaptable by the operator.

11. Method of controlling a bunk load system (10) comprising a load bunk (20) with support arms (30),
the support arm (30) having a horizontal and vertical section (31, 32), the sections being adjustable by hydraulic actuation,
sensors (40), detecting the position of each section of the load arm,
a load height detection system (50), comprising
a crane (60) adapted for loading and unloading the load bunk (20),
adapted to detect a vertical position of its crane tip (70) in relation to a bottom surface (80) of the load bunk (20),
adapted to detect a loading and unloading operation,
a controller (90), adapted to receive input from the sensors (40) of the load bunk (20) and receiving the input from the vertical position of the crane tip (70), comparing the input values, and
in case the crane (60) is detecting a loading operation and the loading height is at a limit of the load bunk (20), sending as an output a signal to the hydraulic actuation adjusting the height of the vertical section (32) or the length of the horizontal section (31) of the load bunk (20).

12. Method of controlling a bunk load system (10) according to claim 11, wherein the operator can manually adjust the size of the load bunk (20) or activate the automatic change of the size of the bunk load system (10).

## Patentansprüche

1. Rungenladesystem (10), das Folgendes umfasst eine Laderunge (20) mit Stützarmen (30),
wobei der Stützarm (30) einen horizontalen (31) und einen vertikalen Abschnitt (32) aufweist, wobei die Abschnitte durch hydraulische Betätigungsmittel einstellbar sind, Sensoren (40), die die Position jedes Abschnitts des Ladearms detektieren,
ein Ladehöhendetektionssystem (50), das Folgendes umfasst
einen Kran (60), der zum Beladen und Entladen der Laderunge (20) ausgelegt ist,
der dazu ausgelegt ist, eine vertikale Position seiner Kranspitze (70) in Relation zu einer unteren Fläche (80) der Laderunge (20) zu detektieren,
der dazu ausgelegt ist, einen Belade- und Entladevorgang zu detektieren, und
eine Steuerung (90), die dazu ausgelegt ist, eine Eingabe von den Sensoren (40) der Laderunge (20) zu empfangen, die Eingabe von der vertikalen Position der Kranspitze (70) zu empfangen,
und die Eingabewerte zu vergleichen, und
falls der Kran (60) einen Beladevorgang detektiert und die Ladehöhe an einer Grenze der Laderunge (20) liegt, die Steuerung ferner dazu ausgelegt ist, als eine Ausgabe ein Signal an die hydraulischen Betätigungsmittel zu senden,
das die Höhe des vertikalen Abschnitts (32) oder die Länge des horizontalen Abschnitts (31) der Laderunge (20) einstellt.

2. Rungenladesystem (10) nach Anspruch 1, wobei die Steuerung (90) dazu ausgelegt ist, eine Ausgabe an die hydraulischen Betätigungsmittel zu senden, um die Höhe des vertikalen Abschnitts (32) oder die Länge des horizontalen Abschnitts (31) der Laderunge (20) zu reduzieren, wenn der Kran (60) einen Entladevorgang detektiert und das Sensorsignal eine reduzierte Ladehöhe anzeigt.

3. Rungenladesystem (10) nach einem der vorhergehenden Ansprüche, wobei jeder Abschnitt ein inneres und ein äußeres Segment umfasst, die teleskopisch miteinander verbunden sind, so dass die Länge des vertikalen und des horizontalen Abschnitts variabel ist.

4. Rungenladesystem (10) nach einem der vorhergehenden Ansprüche, wobei jeder Abschnitt ferner einen inneren hydraulischen Aktuator mit mindestens einer hydraulischen Druckkammer umfasst, der mit dem horizontalen und dem vertikalen Abschnitt verbunden ist, so dass eine Bewegung der hydraulischen Aktuatoren die Längen des vertikalen bzw. des horizontalen Abschnitts ändert.

5. Rungenladesystem (10) nach einem der vorhergehenden Ansprüche, wobei das Ladevolumen der Laderunge (20) durch Betätigen des hydraulischen Aktuators auslegbar ist.

6. Rungenladesystem (10) nach einem der vorhergehenden Ansprüche, wobei
der Kran (60) dazu ausgelegt ist, einen vertikalen Schwenkwinkel, einen Drehwinkel, mindestens einen horizontalen Abstand der Kranspitze (70) zur Basis des Krans (60) und eine Höhenposition der Kranspitze (70) relativ zur Laderunge (20) zu detektieren.

7. Rungenladesystem (10) nach einem der vorhergehenden Ansprüche, wobei die Steuerung (90) dazu ausgelegt ist, die Positionierungsdaten des Krans (60) und der Kranspitze (70) zu empfangen,
wobei die Steuerung (90) dazu ausgelegt ist, die Daten des vertikalen Schwenkwinkels, des Drehwinkels, des Abstands und die Höhendaten zu interpretieren, um zu identifizieren, ob sich die Kranspitze (70) innerhalb oder außerhalb der Laderunge (20) befindet, und um einen Belade- oder einen Entladevorgang durch eine sich erhöhende oder verringernde Kranspitzenhöhe im Bereich der Laderunge (20) an einer Endposition zu identifizieren,
wobei die Endposition durch einen Öffnungs-/Schließzustand eines Greiferwerkzeugs definiert ist, und eine vollständig beladene oder vollständig entladene Laderunge (20) bestimmt.

8. Rungenladesystem (10) nach dem vorhergehenden Anspruch, wobei mehrere Endpositionen aufgezeichnet werden und die Steuerung (90) dazu ausgelegt ist, die mehreren Endpositionen zu vergleichen, um einen Belade- oder Entladevorgang zu identifizieren, und anzeigt, wann eine oberste oder unterste Position erreicht ist.

9. Rungenladesystem (10) nach einem der Ansprüche 7 oder 8, wobei die Endposition eine Position ist, in der die Kranspitze (70) stoppt und die vertikale Richtung umkehrt, oder wobei der Greifer zwischen einem geöffneten oder geschlossenen Zustand betätigt wird.

10. Rungenladesystem (10) nach einem der vorhergehenden Ansprüche, wobei die Messung der Laderunge (20) durch den Bediener auslegbar ist.

11. Verfahren zum Steuern eines Rungenladesystems (10), das Folgendes umfasst
eine Laderunge (20) mit Stützarmen (30),
wobei der Stützarm (30) einen horizontalen und einen vertikalen Abschnitt (31, 32) aufweist, wobei die Abschnitte durch hydraulische Betätigung einstellbar sind,
Sensoren (40), die die Position jedes Abschnitts des Ladearms detektieren,
ein Ladehöhendetektionssystem (50), das Folgendes umfasst
einen Kran (60), der zum Beladen und Entladen der Laderunge (20) ausgelegt ist,
der dazu ausgelegt ist, eine vertikale Position seiner Kranspitze (70) in Relation zu einer unteren Fläche (80) der Laderunge (20) zu detektieren,
der dazu ausgelegt ist, einen Belade- und Entladevorgang zu detektieren,
eine Steuerung (90), die dazu ausgelegt ist, eine Eingabe von den Sensoren (40) der Laderunge (20) zu empfangen, und die Eingabe von der vertikalen Position der Kranspitze (70) empfängt,
die Eingabewerte vergleicht, und
falls der Kran (60) einen Beladevorgang detektiert und die Ladehöhe an einer Grenze der Laderunge (20) liegt, als eine Ausgabe ein Signal an die hydraulische Betätigung sendet, das die Höhe des vertikalen Abschnitts (32) oder die Länge des horizontalen Abschnitts (31) der Laderunge (20) einstellt.

12. Verfahren zum Steuern eines Rungenladesystems (10) nach Anspruch 11, wobei der Bediener die Größe der Laderunge (20) manuell einstellen oder die automatische Änderung der Größe des Rungenladesystems (10) aktivieren kann.

## Revendications

1. Système de charge traversière (10), comprenant :
une traverse de charge (20) dotée de bras de support (30),
le bras de support (30) présentant une section horizontale (31) et verticale (32), les sections étant réglables par des moyens d'actionnement hydrauliques,
des capteurs (40), détectant la position de chaque section du bras porteur,
un système de détection de hauteur de charge (50), comprenant
une grue (60) conçue pour charger et décharger la traverse de charge (20),
conçu pour détecter une position verticale de l'extrémité de la grue (70) par rapport à une surface inférieure (80) de la traverse de charge (20),
conçu pour détecter une opération de charge et de décharge, et
un contrôleur (90), conçu pour recevoir une entrée provenant des capteurs (40) de la traverse de charge (20), pour recevoir l'entrée provenant de la position verticale de l'extrémité de la grue (70),
et pour comparer les valeurs d'entrée, et
dans le cas où la grue (60) détecte une opération de charge et où la hauteur de charge se trouve à une limite de la traverse de charge (20), le contrôleur est en outre conçu pour envoyer en sortie un signal aux moyens d'actionnement hydrauliques,
le réglage de la hauteur de la section verticale (32) ou de la longueur de la section horizontale (31) de la traverse de charge (20).

2. Système de charge traversière (10) selon la revendication 1, dans lequel le contrôleur (90) est conçu pour envoyer une sortie aux moyens d'actionnement hydrauliques pour réduire la hauteur de la section verticale (32) ou la longueur de la section horizontale (31) de la traverse de charge (20) lorsque la grue (60) détecte une opération de décharge et que le signal de capteur indique une hauteur de charge réduite.

3. Système de charge traversière (10) selon l'une quelconque des revendications précédentes, dans lequel chaque section comprend un segment intérieur et un segment extérieur, qui sont reliés de manière télescopique l'un à l'autre, de sorte que la longueur des sections verticale et horizontale est variable.

4. Système de charge traversière (10) selon l'une quelconque des revendications précédentes, dans lequel chaque section comprend en outre un actionneur hydraulique intérieur doté d'au moins une chambre de pression hydraulique, relié aux sections horizontale et verticale, de sorte que le mouvement des actionneurs hydrauliques modifie respectivement les longueurs des sections verticale et horizontale.

5. Système de charge traversière (10) selon l'une quelconque des revendications précédentes, dans lequel le volume de charge de la traverse de charge (20) peut être adapté en actionnant l'actionneur hydraulique.

6. Système de charge traversière (10) selon l'une quelconque des revendications précédentes, dans lequel la grue (60) est conçue pour détecter un angle de pivotement vertical, un angle de rotation, au moins une distance horizontale entre l'extrémité de la grue (70) et la base de la grue (60) et une position en hauteur de l'extrémité de la grue (70) par rapport à la traverse de charge (20).

7. Système de charge traversière (10) selon l'une quelconque des revendications précédentes, dans lequel le contrôleur (90) est conçu pour recevoir les données de positionnement de la grue (60) et de l'extrémité de la grue (70),
le contrôleur (90) étant conçu pour interpréter les données de l'angle de pivotement vertical, de l'angle de rotation, de la distance et des données de hauteur pour identifier si l'extrémité de la grue (70) se trouve à l'intérieur ou à l'extérieur de la traverse de charge (20), et pour identifier une opération de charge ou de décharge par l'augmentation ou la diminution de la hauteur de l'extrémité de la grue dans la zone de la traverse de charge (20) à une position finale,
la position finale étant définie par un état d'ouverture/fermeture d'un grappin,
et pour déterminer une traverse de charge (20) entièrement chargée ou entièrement déchargée.

8. Système de charge traversière (10) selon la revendication précédente, dans lequel une pluralité de positions finales sont enregistrées et le contrôleur (90) est conçu pour comparer la pluralité de positions finales pour identifier une opération de charge ou de décharge, et indiquer quand une position la plus haute ou la plus basse est atteinte.

9. Système de charge traversière (10) selon l'une quelconque des revendications 7 ou 8, dans lequel la position finale est une position où l'extrémité de la grue (70) s'arrête et inverse la direction verticale, ou où le grappin est actionné entre un état ouvert ou fermé.

10. Système de charge traversière (10) selon l'une quelconque des revendications précédentes, dans lequel la mesure de la traverse de charge (20) peut être adaptée par l'opérateur.

11. Procédé de commande d'un système de charge traversière (10) comprenant
une traverse de charge (20) dotée de bras de support (30),
le bras de support (30) présentant une section horizontale et verticale (31, 32), les sections étant réglables par actionnement hydraulique,
des capteurs (40), détectant la position de chaque section du bras porteur,
un système de détection de hauteur de charge (50), comprenant
une grue (60) conçue pour charger et décharger la traverse de charge (20),
conçu pour détecter une position verticale de l'extrémité de la grue (70) par rapport à une surface inférieure (80) de la traverse de charge (20),
conçu pour détecter une opération de charge et de décharge,
un contrôleur (90), conçu pour recevoir une entrée provenant des capteurs (40) de la traverse de charge (20) et recevoir l'entrée provenant de la position verticale de l'extrémité de la grue (70),
comparer les valeurs d'entrée, et
dans le cas où la grue (60) détecte une opération de charge et où la hauteur de charge se trouve à une limite de la traverse de charge (20), envoyer en sortie un signal à l'actionnement hydraulique pour régler la hauteur de la section verticale (32) ou la longueur de la section horizontale (31) de la traverse de charge (20).

12. Procédé de commande d'un système de charge traversière (10) selon la revendication 11, dans lequel l'opérateur peut régler manuellement la taille de la traverse de charge (20) ou activer le changement automatique de la taille du système de charge traversière (10).
